# EUROPÄISCHE PATENTSCHRIFT

(11) **EP 3 432 539 B1**
(45) Veröffentlichungstag und Bekanntmachung des Hinweises auf die Patenterteilung: **23.12.2020**
(21) Anmeldenummer: 17182325.5
(22) Anmeldetag: 20.07.2017
(51) Int. Cl.: H04L 29/06, G06F 21/33, H04L 29/08

(54) **VERFAHREN ZUM AUFBAU EINES KOMMUNIKATIONSKANALS ZWISCHEN EINER SERVEREINRICHTUNG UND EINER CLIENTEINRICHTUNG**
METHOD FOR ESTABLISHING A COMMUNICATION CHANNEL BETWEEN A SERVER DEVICE AND A CLIENT DEVICE
PROCÉDÉ D'ÉTABLISSEMENT D'UN CANAL DE COMMUNICATION ENTRE UN DISPOSITIF SERVEUR ET UN DISPOSITIF CLIENT

(43) Veröffentlichungstag der Anmeldung: 23.01.2019
(73) Patentinhaber: Siemens Aktiengesellschaft, 80333 München (DE)
(72) Erfinder: Falk, Rainer, 85586 Poing (DE); Fries, Steffen, 85598 Baldham (DE)

(56) Entgegenhaltungen:
- US-A1- 2014 282 957
- DIERKS INDEPENDENT E RESCORLA RTFM T ET AL: "The Transport Layer Security (TLS) Protocol Version 1.2; rfc5246.txt", THE TRANSPORT LAYER SECURITY (TLS) PROTOCOL VERSION 1.2; RFC5246.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. August 2008 (2008-08-01), XP015060256,
- BROWN REDPHONE SECURITY R HOUSLEY VIGIL SECURITY M: "Transport Layer Security (TLS) Authorization Extensions; rfc5878.txt", TRANSPORT LAYER SECURITY (TLS) AUTHORIZATION EXTENSIONS; RFC5878.TXT, INTERNET ENGINEERING TASK FORCE, IETF; STANDARD, INTERNET SOCIETY (ISOC) 4, RUE DES FALAISES CH- 1205 GENEVA, SWITZERLAND, 6. Mai 2010 (2010-05-06), Seiten 1-19, XP015070793, [gefunden am 2010-05-06]
- JONES MICROSOFT J BRADLEY PING IDENTITY N SAKIMURA NRI M: "JSON Web Token (JWT); rfc7519.txt", JSON WEB TOKEN (JWT); RFC7519.TXT, INTERNET ENGINEERING TASK FORCE, IETF; STANDARD, INTERNET SOCIETY (ISOC) 4, RUE DES FALAISES CH- 1205 GENEVA, SWITZERLAND, 20. Mai 2015 (2015-05-20), Seiten 1-30, XP015106168, [gefunden am 2015-05-20]
- Anonymous: "X.509 - Wikipedia", , 30. Juni 2017 (2017-06-30), XP055431450, Gefunden im Internet: URL:https://en.wikipedia.org/w/index.php?t itle=X.509&oldid=788233660 [gefunden am 2017-12-04]

## Beschreibung

Die vorliegende Erfindung betrifft ein Verfahren zum Aufbau eines Kommunikationskanals zum Austausch von Daten zwischen einer Servereinrichtung und einer Clienteinrichtung.

Damit Daten zwischen einer Clienteinrichtung, wie z.B. einem Internet der Dinge (IdD) Gerät, und einer Servereinrichtung, wie z.B. einem Internetserver, ausgetauscht werden können, kann ein Aufbau eines Kommunikationskanals bzw. ein Verbindungsaufbau zwischen der Clienteinrichtung und der Servereinrichtung notwendig sein. Häufig umfasst der Aufbau des Kommunikationskanals eine Authentisierung der Clienteinrichtung bei der Servereinrichtung.

Es ist bekannt, dass die Clienteinrichtung sich mit einer Authentisierungsinformation authentisiert, die ihr von einer Ausstellereinrichtung bereitgestellt wird. Die Authentisierung erfolgt häufig separat von dem Verbindungsaufbau zwischen der Clienteinrichtung und der Servereinrichtung. Es besteht ein Bedarf an einer verbesserten Authentisierung, die Teil des Verbindungsaufbaus zwischen der Clienteinrichtung und der Servereinrichtung ist.

Der Standard "The Transport Layer Security (TLS) Protocol Version 1.2; RFC 5246" beschreibt das TLS-Internetprotokoll. Der Standard "Transport Layer Security (TLS) Authorization Extensions; RFC 5878" beschreibt Erweiterungen für das TLS-Protokoll.
Zudem beschreibt der Standard "JSON Web Token (JWT); RFC 7519" Eigenschaften von JSON Web Token.

Ferner offenbart das Dokument US 2014/282957 A1 ein Authentifizieren von Einrichtungen über das TLS-Protokoll.

Vor diesem Hintergrund besteht eine Aufgabe der vorliegenden Erfindung darin, ein verbessertes Verfahren zum Aufbau eines Kommunikationskanals zum Austausch von Daten zwischen einer Servereinrichtung und einer Clienteinrichtung bereitzustellen.

Demgemäß wird ein Verfahren zum Aufbau eines Kommunikationskanals zum Austausch von Daten zwischen einer Servereinrichtung und einer Clienteinrichtung gemäß Anspruch 1 vorgeschlagen.

Das Verfahren kann ferner umfassen:
Authentisieren der Clienteinrichtung durch eine Ausstellereinrichtung;
Anfordern einer Authentisierungsinformation für die Clienteinrichtung durch die Clienteinrichtung von der Ausstellereinrichtung;
Übertragen der Authentisierungsinformation durch die Ausstellereinrichtung an die Clienteinrichtung;
Übertragen der Authentisierungsinformation von der Clienteinrichtung an die Servereinrichtung in einem kryptographische Sicherheitsprotokoll;
Authentisieren der Clienteinrichtung durch die Servereinrichtung in Abhängigkeit von der empfangenen Authentisierungsinformation; und
Aufbauen des Kommunikationskanals zwischen der Servereinrichtung und der authentisierten Clienteinrichtung über das kryptographische Sicherheitsprotokoll;
wobei das kryptographische Sicherheitsprotokoll (4) ein TLS-Handshake-Protokoll ist; und
die Authentisierungsinformation ein JSON Web Token ist.

Die Servereinrichtung, im Folgenden auch "Server", ist insbesondere ein Gerät oder ein Programm, auf das die Clienteinrichtung, im Folgenden auch "Client", zugreifen kann. Die Clienteinrichtung kann beispielsweise ein IdD-Gerät oder ein Feldgerät oder auch der Computer eines Servicetechnikers sein. Die Servereinrichtung kann beispielsweise ein Internetserver oder ein Computer oder ebenfalls ein Feldgerät sein.

Zum Aufbau des Kommunikationskanals zwischen der Servereinrichtung und der Clienteinrichtung kann eine Authentisierung der Clienteinrichtung bei der Servereinrichtung notwendig sein. Diese kann gemäß dem kryptographischen Sicherheitsprotokoll erfolgen. Zur Authentisierung der Clienteinrichtung kann die Servereinrichtung eine Authentisierungsinformation der Clienteinrichtung benötigen. Hierzu kann die Servereinrichtung bei der Clienteinrichtung die Authentisierungsinformation anfordern. Die Authentisierungsinformation kann eine clientspezifische Information umfassen.

Die Authentisierungsinformation kann z.B. ein digitales Zertifikat oder ein Token, insbesondere ein Simple Web Token (SWT), ein Security Assertion Markup Language Tokens (SAML) oder ein JSON Web Token (JWT) sein.

In Ausführungsformen wird die Authentisierungsinformation durch die Ausstellereinrichtung erstellt und/oder an die Clienteinrichtung bereitgestellt. Die Ausstellereinrichtung kann eine Identitätsmanagementeinrichtung sein, die auf Anfrage einer Clienteinrichtung eine Authentisierungsinformation für die anfragende Clienteinrichtung erstellt. Die Ausstellereinrichtung kann Teil der Servereinrichtung oder ein separater/einzelner Server sein. Die Ausstellereinrichtung kann ferner als ein Cloud-basierter Dienst realisiert sein und beispielsweise auf einer Cloud-Plattform ausgeführt sein. Ferner können Infrastrukturen wie OpenID oder OAuth als Ausstellereinrichtungen verwendet werden.

Die Servereinrichtung kann die Clienteinrichtung über das kryptographische Sicherheitsprotokoll über ein Netzwerk zur Übertragung der Authentisierungsinformation anfordern. In Ausführungsformen umfasst das Verfahren hierzu ein Anfordern der Authentisierungsinformation für die Clienteinrichtung durch die Servereinrichtung über das kryptographische Sicherheitsprotokoll von der Clienteinrichtung. Die Servereinrichtung kann der Clienteinrichtung, z.B. über das kryptographische Sicherheitsprotokoll, eine Anfrage zum Anfordern der Authentisierungsinformation zukommen lassen. Diese Anfrage kann eine oder mehrere Ausstellereinrichtungen vorgeben. Die Clienteinrichtung kann auch von sich aus der Servereinrichtung die Authentisierungsinformation bereitstellen, also ohne dass die Servereinrichtung die Authentisierungsinformation explizit beantragen muss.

Die Clienteinrichtung kann die durch die Ausstellereinrichtung erstellte Authentisierungsinformation an die Servereinrichtung übertragen. Die Übertragung der Authentisierungsinformation von der Clienteinrichtung an die Servereinrichtung erfolgt dabei insbesondere über das kryptographische Sicherheitsprotokoll.

Das kryptographische Sicherheitsprotokoll, das die Authentisierungsinformation nutzt, kann ein kryptographisch gesichertes Netzwerkauthentisierungsprotokoll sein, welches z.B. über IEEE 802.1X, IEEE 802.11 (WLAN), IEEE 802.16 (WiMAX), oder aber im Kontext eines speziellen Sicherheitsprotokolls wie z.B. IPsec mit IKEv2 oder auch TLS verwendet werden.

Das kryptographische Sicherheitsprotokoll ist insbesondere ein Protokoll, das zur Authentisierung der Clienteinrichtung bei der Servereinrichtung und zur Bestimmung von Schlüsseln, beispielsweise in eine Schlüsselvereinbarung zwischen der Clienteinrichtung und der Servereinrichtung, verwendbar ist.

Die durch die Servereinrichtung empfangene Authentisierungsinformation wird insbesondere durch die Servereinrichtung verwendet, um die Clienteinrichtung zu authentisieren. Die Servereinrichtung kann anhand der empfangenen Authentisierungsinformation überprüfen, ob die Clienteinrichtung zuverlässig ist und bestimmen, ob der Aufbau des Kommunikationskanals im Hinblick auf die Sicherheit zugelassen werden soll.

Die Authentisierungsinformation durch die Ausstellereinrichtung ausstellen zu lassen ist besonders vorteilhaft, weil die Servereinrichtung nicht alle einzelnen Clienteinrichtungen kennen muss und nicht wissen muss, welche Clienteinrichtungen zuverlässig sind. Stattdessen ist es ausreichend, wenn die Servereinrichtungen die Zuverlässigkeit der Ausstellereinrichtung einschätzen kann. Weil üblicherweise weniger Ausstellereinrichtungen als Clienteinrichtungen vorliegen, muss weniger Zulässigkeitsinformation in der Speichereinrichtung gespeichert werden, wodurch Speicherplatz in der Servereinrichtung eingespart werden kann. Es können ferner Clienteinrichtungen authentisiert werden, die selbst keine Authentisierungsinformation erstellen können. Dies ist insbesondere für Clienteinrichtungen anwendbar, die z.B. nur eingeschränkte Funktionalität haben oder ggf. keine Zertifikate zur Authentisierung an einem Server besitzen.

Wenn die Authentisierung erfolgreich abgeschlossen ist, kann der Kommunikationskanal zwischen der Servereinrichtung und der authentisierten Clienteinrichtung über das vorbestimmte Protokoll eingerichtet werden. Die Servereinrichtung und die Clienteinrichtung können insbesondere über den Kommunikationskanal Daten sicher austauschen.

Die Authentisierung der Clienteinrichtung kann über das kryptographische Sicherheitsprotokoll erfolgen. Ferner kann die Authentisierung Teil des Aufbaus des Kommunikationskanals zwischen der Clienteinrichtung und der Servereinrichtung sein.

Die Authentisierung der Clienteinrichtung kann hierbei im gleichen kryptographischen Sicherheitsprotokoll wie eine Authentisierung der Servereinrichtung erfolgen, sodass man bezüglich der Authentisierung keinen Bruch zwischen den OSI-Layern ("Open System Interconnection") hat.

Darüber hinaus können Kommunikationsdienste, zum Beispiel HTTPS, über den sicheren Kommunikationskanal die Sicherheit des Kanals nutzen, ohne selbst Sicherheitsfunktionen integrieren zu müssen. Die Sicherheit kann im Wesentlichen über das TLS-Protokoll realisiert werden.

In Ausführungsformen weist das zuvor und im Folgenden beschriebene Verfahren zumindest einen der folgenden Schritte auf:
Authentisieren der Clienteinrichtung durch die Ausstellereinrichtung;
Anfordern der Authentisierungsinformation für die Clienteinrichtung durch die Clienteinrichtung von der Ausstellereinrichtung; und/oder
Übertragen der Authentisierungsinformation durch die Ausstellereinrichtung an die Clienteinrichtung.

Gemäß einer Ausführungsform ist das kryptographische Sicherheitsprotokoll ein Protokoll aus der Internetprotokollfamilie. Die Internetprotokollfamilie umfasst Netzwerkprotokolle, die die Basis für die Netzkommunikation im Internet bilden.

Beispiele für kryptographische Sicherheitsprotokolle umfassen IEEE 802.1X, IEEE 802.11 (WLAN), IEEE 802.16 (WiMax), IPsec (internet protocol security), IKEv2 (internet key exchange), usw.

Gemäß einer weiteren Ausführungsform ist das kryptographische Sicherheitsprotokoll ein Protokoll für die Transportschicht, insbesondere ein TLS-Protokoll.

"TLS" steht für "Transport Layer Security". Die Clienteinrichtung kann ein TLS-Client und die Servereinrichtung ein TLS-Server sein. Insbesondere entspricht das kryptographische Sicherheitsprotokoll dem TLS-Internetstandard RFC 5246.

In Ausführungsformen erfolgt die Authentisierung der Clienteinrichtung nicht über das üblich verwendete HTTP-Protokoll sondern direkt in einer darunterliegenden Protokollschicht, insbesondere in der Transportschicht.

Gemäß einer weiteren Ausführungsform ist das Verfahren Teil eines TLS-Handshakes zwischen der Clienteinrichtung und der Servereinrichtung. Der TLS-Handshake ist ein Authentisierungs- und Schlüsselvereinbarungsprotokoll, der über das TLS-Protokoll erfolgt. Der TLS-Handshake kann zum Verbindungsaufbau zwischen der Clienteinrichtung und der Servereinrichtung dienen.

In Ausführungsformen kann die Clienteinrichtung die Authentisierungsinformation während des Authentisierungs- und Schlüsselvereinbarungsprotokolls, insbesondere während des TLS-Handshakes, über eine sich im Verbindungsaufbau befindende TLS-Verbindung an die Servereinrichtung übertragen.

Gemäß einer weiteren Ausführungsform ist die Authentisierungsinformation ein JSON Web Token. Ein JSON Web Token ist ein JSON basiertes und nach RFC 7519 genormtes Token, mit welchem Claims als JSON Objekte beschrieben werden. JSON Web Token dienen insbesondere zur sicheren Datenübertragung zwischen der Clienteinrichtung und der Servereinrichtung.

Einen JSON Web Token als die Authentisierungsinformation zu verwenden ist vorteilhaft, weil JSON Web Token besonders kompakt sind. Ferner ermöglichen sie anhand von digitalen Signaturen und/oder kryptographischen Schlüsseln eine sichere Datenübertragung.

Ein Authentisierungsprotokoll, insbesondere der TLS-Handshake Protokoll, kann erweitert werden, sodass ein JSON Web Token (JWT) im Rahmen eines TLS-Verbindungsaufbaus von einer Clienteinrichtung an eine Servereinrichtung übertragen werden kann.

In der Authentisierungsvariante für das TLS-Protokoll kann sich die Clienteinrichtung über den JWT direkt innerhalb des TLS-Protokolls authentisieren. Der TLS-Handshake wird in Ausführungsformen derart erweitert, dass er als neue Authentisierungsoption zusätzlich das JWT-Format unterstützt.

In Ausführungsformen wird eine TLS-Erweiterung für das TLS-Protokoll vorgeschlagen, die einen Transport von JSON Web-Token innerhalb des TLS-Protokolls ermöglicht. Insbesondere wird ein zusätzliches Sicherheitstokenformat durch TLS unterstützt. Die TLS-Erweiterung erweitert hierzu insbesondere RFC 5878. In der TLS-Erweiterung können die JWT direkt und/oder als eine Referenz transportiert werden.

In Ausführungsformen wird das JWT zusammen mit einer bekannten TLS-Clientauthentisierung unter Verwendung eines kryptographischen Client-Schlüssels verwendet.

Gemäß einer weiteren Ausführungsform ist der Authentisierungsinformation eine Ausstellereinrichtung zugeordnet, die einen Austeller der Authentisierungsinformation angibt.

Die Ausstellereinrichtung kann Teil der Authentisierungsinformation sein oder als separate Datei vorliegen. Sie gibt insbesondere an, welche Ausstellereinrichtung die Authentisierungsinformation erstellt hat und/oder an die Clienteinrichtung übertragen hat. Die Ausstellerinformation ist zum Beispiel eine URL (uniform resource locator), eine URI (uniform ressource identifier), eine IP-Adresse, usw.

Das Authentisierungsprotokoll, insbesondere das TLS-Handshake Protokoll, kann erweitert werden, sodass eine Ausstellereinrichtung der Servereinrichtung bereitgestellt wird. Eine HTTP-Umleitung (HTTP-Redirect), die üblicherweise bei einer JWT-basierten Authentisierung verwendet wird und bei der die Clienteinrichtung zu der Ausstellereinrichtung umgeleitet wird, ist nicht erforderlich.

Die Ausstellereinrichtung kann bei Empfang der Authentisierungsinformation durch die Servereinrichtung ausgewertet werden, um zu ermitteln, von welcher Ausstellereinrichtung die Authentisierungsinformation ausgestellt wurde.

Gemäß einer weiteren Ausführungsform umfasst das Verfahren ferner:
Speichern einer Zulässigkeitsliste in der Clienteinrichtung oder in der Servereinrichtung, die angibt, welche Ausstellereinrichtung aus einer Vielzahl von Ausstellereinrichtungen eine zum Authentisieren der Clienteinrichtung zulässige Authentisierungsinformation erstellen können;
Überprüfen, in der Clienteinrichtung oder in der Servereinrichtung, ob die der Authentisierungsinformation zugeordnete Ausstellereinrichtung gemäß der Zulässigkeitsliste zulässig ist; und
Falls die Ausstellereinrichtung gemäß der Zulässigkeitsliste zulässig ist, Authentisieren der Clienteinrichtung durch die Servereinrichtung anhand der Authentisierungsinformation.

Die Zulässigkeitsliste enthält insbesondere eine Liste von Ausstellereinrichtungen, die eine von der Speichereinrichtung als zulässig erachtete Authentisierungsinformation erstellen können. Die Zulässigkeitsliste kann die Ausstellereinrichtung, beispielsweise die URI, der zulässigen Ausstellereinrichtungen umfassen.

Die Speichereinrichtung kann die Zulässigkeitsliste an die Clienteinrichtung übertragen, insbesondere über das vorbestimmte Protokoll.

Anhand der Zulässigkeitsliste kann die Clienteinrichtung eine Vorauswahl der Authentisierungsinformation treffen. Beispielsweise akzeptiert die Clienteinrichtung nur eine Authentisierungsinformation, die gemäß der Zulässigkeitsliste als zulässig gilt. Die Clienteinrichtung kann auch nur eine Authentisierungsinformation an die Servereinrichtung übertragen, die gemäß der Zulässigkeitsliste als zulässig gilt.

Die Clienteinrichtung kann ferner eine von mehreren Authentisierungsinformationen auswählen, die im Hinblick auf die Zulässigkeitsliste zulässig ist und diese der Servereinrichtung übertragen.

Eine Authentisierungsinformation, die im Hinblick auf die Zulässigkeitsliste nicht zugelassen ist, kann insbesondere nicht zum Authentisieren der Clienteinrichtung verwendet werden.

Die Zulässigkeitsliste kann somit zum Überprüfen der Zulässigkeit einer Authentisierungsinformation verwendet werden. Die Zulässigkeitsliste ersetzt die herkömmliche HTTP-Umleitung.

Gemäß einer weiteren Ausführungsform enthält die Authentisierungsinformation eine Sitzungsinformation über die aktuelle Verbindung zwischen der Clienteinrichtung und der Servereinrichtung. Die Sitzungsinformation kann eine aktuelle Sitzung der Clienteinrichtung und der Servereinrichtung angeben. Sie kann der Ausstellereinrichtung beim Ausstellen der Authentisierungsinformation durch die Clienteinrichtung bereitgestellt werden. Die Clienteinrichtung kann die Sitzungsinformation zuvor von der Servereinrichtung erhalten haben. Die Servereinrichtung kann die Gültigkeit der Sitzungsinformation beim Empfang der Authentisierungsinformation prüfen. Insbesondere authentisiert die Servereinrichtung die Clienteinrichtung nur bei einer gültigen Sitzungsinformation.

Gemäß einer weiteren Ausführungsform ist der Authentisierungsinformation eine Zielinformation zugeordnet, die eine Zielservereinrichtungsinformation, für den das Authentisierungstoken bestimmt ist, angibt.

Gemäß einer weiteren Ausführungsform umfasst dasVerfahren ferner:
Überprüfen durch die Clienteinrichtung, ob die Zielservereinrichtungsinformation mit der Servereinrichtung, die die Authentisierungsinformation beantragt hat, übereinstimmt; und
Falls die Zielservereinrichtungsinformation mit der Servereinrichtung übereinstimmt, Übertragen der Authentisierungsinformation von der Clienteinrichtung an die Servereinrichtung.

Die Zielservereinrichtungsinformation, auch Zielinformation, wird der Authentisierungsinformation beispielsweise durch die Ausstellereinrichtung zugeordnet. Die Zielinformation kann Teil der Authentisierungsinformation oder eine separate Datei sein. Die Zielinformation kann angeben, gegenüber welcher Servereinrichtung die Authentisierungsinformation verwendbar ist.

Die Clienteinrichtung kann anhand der Zielinformation insbesondere diejenige Authentisierungsinformation auswählen, die für die Servereinrichtung, die die Authentisierungsinformation angefordert hat, passend ist.

Gemäß einer weiteren Ausführungsform umfasst das Verfahren ferner:
Auswählen, in der Clienteinrichtung, einer Authentisierungsinformation aus einer Vielzahl von Authentisierungsinformationen, der eine gemäß der Zulässigkeitsliste zulässige Ausstellereinrichtung zugeordnet ist und/oder der eine Zielservereinrichtungsinformation zugeordnet ist, die mit der Servereinrichtung, die die Anfrage an die Clienteinrichtung übermittelt hat, übereinstimmt; und
Übertragen der ausgewählten Authentisierungsinformation von der Clienteinrichtung an die Servereinrichtung über das kryptographische Sicherheitsprotokoll.

Gemäß einer weiteren Ausführungsform umfasst das Verfahren ferner:
Falls die Clienteinrichtung nicht durch die Servereinrichtung authentisiert wird, Blockieren des Aufbaus des Kommunikationskanals zwischen der Servereinrichtung und der Clienteinrichtung.

Der Kommunikationskanal wird insbesondere nur eingerichtet, wenn die Clienteinrichtung erfolgreich durch die Servereinrichtung authentisiert wurde. Wird die Clienteinrichtung nicht erfolgreich authentisiert, kann der Aufbau des Kommunikationskanals blockiert werden und es kann eine Fehlermeldung durch die Servereinrichtung und/oder die Clienteinrichtung ausgegeben werden.

Gemäß einer weiteren Ausführungsform umfasst das Verfahren ferner:
Übertragen einer clienteinrichtungsbezogenen Information von der Clienteinrichtung an die Ausstellereinrichtung ; und
Erstellen der Authentisierungsinformation unter Berücksichtigung der clienteinrichtungsbezogenen Information in der Ausstellereinrichtung .

Anhand der clienteinrichtungsbezogenen Information kann eine clienteinrichtungsspezifische Authentisierungsinformation durch die Ausstellereinrichtung erstellt werden.

Gemäß einer weiteren Ausführungsform umfasst die Authentisierungsinformation zumindest eine Handhabungsinformation (Version, Optionen), die Angaben zum ordnungsgemäßen Übertragen und/oder Benutzen der Authentisierungsinformation angibt. Das Übertragen der Authentisierungsinformation und/oder das Authentisieren der Clienteinrichtung erfolgt unter Berücksichtigung der Handhabungsinformation.

Die Handhabungsinformation gibt beispielsweise an, mit welchen Protokollversionen und Optionen die Authentisierungsinformation verwendet werden kann. Falls die Authentisierungsinformation ein JWT ist, kann die Handhabungsinformation die TLS-Protokollversion (z.B. TLS1.2 oder TLS1.3), die TLS-Cipher Suites und die TLS-Optionen angeben, mit welchen der JWT verwendbar ist.

Gemäß einer weiteren Ausführungsform umfasst das Verfahren ferner:
Speichern einer Ausstellereinrichtungsliste in der Clienteinrichtung, die die Ausstellereinrichtungen angibt, von denen die Clienteinrichtung eine gültige Authentisierungsinformation besitzt und/oder von denen die Clienteinrichtung eine Authentisierungsinformation anfordern kann.

Die Ausstellereinrichtungsliste kann die Ausstellereinrichtungen, von denen die Clienteinrichtung eine gültige Authentisierungsinformation besitzt und/oder von denen die Clienteinrichtung eine Authentisierungsinformation anfordern kann, z.B. im URL-Format angeben. Die Ausstellereinrichtungsliste gibt insbesondere die Ausstellereinrichtungen an, die mit der Clienteinrichtung verbunden sind und/oder bei denen sich die Clienteinrichtung authentisiert hat.

In Ausführungsformen umfasst das Verfahren ferner ein Vergleichen der Ausstellereinrichtungsliste mit der Zulässigkeitsliste in der Clienteinrichtung zum Bestimmen bzw. Auswählen von zumindest einer Ausstellereinrichtung, die sowohl in der Ausstellereinrichtungsliste als auch in der Zulässigkeitsliste vorliegt. Die Authentisierungsinformation von der ausgewählten Ausstellereinrichtung kann insbesondere als ausgewählte Authentisierungsinformation zur Authentisierung der Clienteinrichtung an die Servereinrichtung übertragen werden.

Ferner kann die Clienteinrichtung in Ausführungsformen die Ausstellereinrichtungsliste an die Servereinrichtung über das Sicherheitsprotokoll übermitteln. Die Servereinrichtung kann dann aus der empfangenen Ausstellereinrichtungsliste eine Ausstellereinrichtung auswählen, von der eine Authentisierungsinformation gewünscht wird.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen des Verfahrens. Dabei wird der Fachmann auch Einzelaspekte als Verbesserungen oder Ergänzungen zu der jeweiligen Grundform des Verfahrens hinzufügen.

Weitere vorteilhafte Ausgestaltungen und Aspekte der Erfindung sind Gegenstand der Unteransprüche sowie der im Folgenden beschriebenen Ausführungsbeispiele. Im Weiteren wird das Verfahren anhand von bevorzugten Ausführungsformen unter Bezugnahme auf die beigelegten Figuren näher erläutert.
- Fig. 1: zeigt ein ausführungsgemäßes System zum Aufbau eines Kommunikationskanals zwischen einer Servereinrichtung und einer Clienteinrichtung;
- Fig. 2: zeigt ein Verfahren zum Aufbau eines Kommunikationskanals zwischen einer Servereinrichtung und einer Clienteinrichtung gemäß einer ersten Ausführungsform;
- Fig. 3: zeigt ein Verfahren zum Aufbau eines Kommunikationskanals zwischen einer Servereinrichtung und einer Clienteinrichtung gemäß einer zweiten Ausführungsform;
- Fig. 4: zeigt ein Verfahren zum Aufbau eines Kommunikationskanals zwischen einer Servereinrichtung und einer Clienteinrichtung gemäß einer dritten Ausführungsform; und
- Fig. 5: zeigt ein System aus dem Stand der Technik.

In den Figuren sind gleiche oder funktionsgleiche Elemente mit denselben Bezugszeichen versehen worden, sofern nichts anderes angegeben ist.

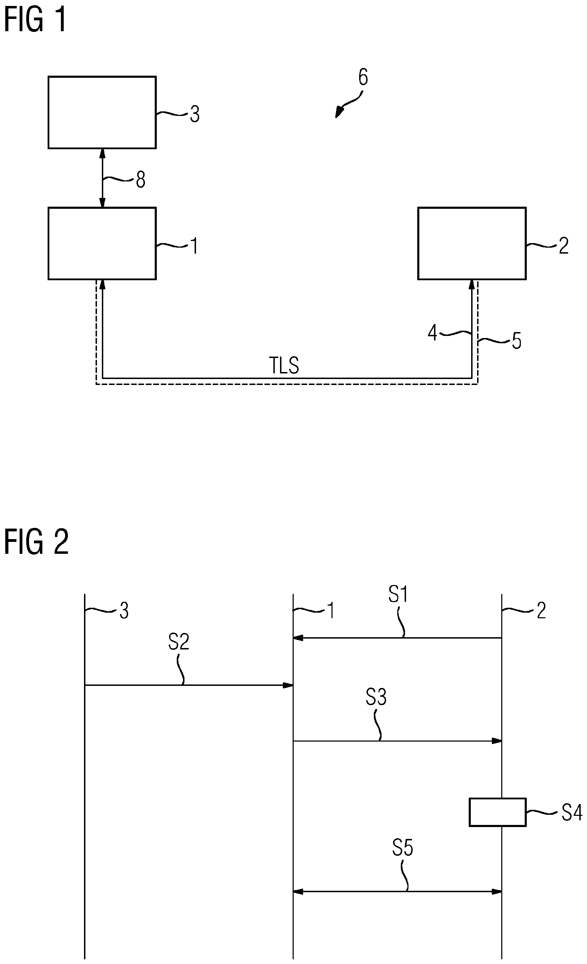

Die Fig. 1 zeigt ein ausführungsgemäßes System 6 zum Aufbau eines Kommunikationskanals 5 zwischen einer Servereinrichtung 2 und einer Clienteinrichtung 1. Das System 6 umfasst die Clienteinrichtung 1, die Servereinrichtung 2 und eine Ausstellereinrichtung 3. Die Clienteinrichtung 1 ist ein Feldgerät für ein Automatisierungsnetzwerk. Die Servereinrichtung 2 ist ein IdD-Server und wird im Folgenden "Server" genannt.

Zur sicheren Datenübertragung zwischen dem Feldgerät 1 und dem Server 2 muss zwischen diesen der Kommunikationskanal 5 aufgebaut werden. Der Aufbau des Kommunikationskanals 5 erfolgt anhand des in der Fig. 2 beschriebenen Verfahrens.

In einem optionalen Schritt S1 fordert der Server 2 das Feldgerät 1 an, ihm eine Authentisierungsinformation zu übertragen. Hierzu übersendet der Server 2 eine Anfrage an das Feldgerät 1 über ein kryptographische Sicherheitsprotokoll 4. Der Server 2 kann hierbei eine Zulässigkeitsliste an akzeptierten Ausstellereinrichtungen für Authentisierungsinformationen zur Verfügung stellen, aus denen das Feldgerät 1 wählen kann.

Das vorbestimmte kryptographische Sicherheitsprotokoll 4 ist ein TLS-Protokoll nach RFC 5246. Die Anfrage des Servers 2 an das Feldgerät ist Teil eines TLS-Handshakes zwischen dem Server 2 und dem Feldgerät 1.
In einem Schritt S2 überträgt die Ausstellereinrichtung 3 die Authentisierungsinformation gemäß dem TLS-Protokoll über eine Netzwerkverbindung 8 an das Feldgerät 1. Die übertragene Authentisierungsinformation wurde zuvor von der Authentisierungseinrichtung 3 erstellt. Die Authentisierungsinformation ist ein JSON Web Token (JWT). Dem JWT ist eine Ausstellereinrichtung zugewiesen, die die URL des Austellers des JWT angibt.

In einem Schritt S3 überträgt das Feldgerät 1 die empfangene Authentisierungsinformation an den Server 2 über das TLS-Protokoll 4.

Ein übliches TLS-Protokoll mit Autorisierungserweiterungen nach RFC5878, welches erfindungsgemäß zur Übertragung von SAML-Token, neben X.509 Zertifikaten, geeignet ist, kann wie folgt zur Implementierung in verbreiteten Programmiersprachen wie C oder C++ folgende Definition umfassen:

```
       enum {
       x509_attr_cert(0), saml_assertion(1),
       x509_attr_cert_url(2), saml_assertion_url(3), (255)
       } AuthzDataFormat;
       AuthzDataFormats authz_format_list<1..2^8-1>;
```

Das TLS-Protokoll 4, das zum Aufbau des Kommunikationskanals 5 zwischen dem Server 2 und dem Feldgerät 1 verwendet wird, umfasst eine Erweiterung zum Übertragen von Token im JWT-Format. Diese Erweiterung ist in der Definition des TLS-Protokolls 4 über die zuvor genannten Autorisierungserweiterungen enthalten. Die zum Übertragen von Token im JWT-Format erweiterte Autorisierungserweiterung für das TLS-Protokoll ist wie folgt definiert:

```
       enum {
       x509_attr_cert(0), saml_assertion(1),
       x509_attr_cert_url(2), saml_assertion_url(3),
       jwt_claim(4), jwt_claim_url(5), (255)
       } AuthzDataFormat;
```

Auch die zulässigen Datenformate, die üblicherweise wie folgt definiert sind: 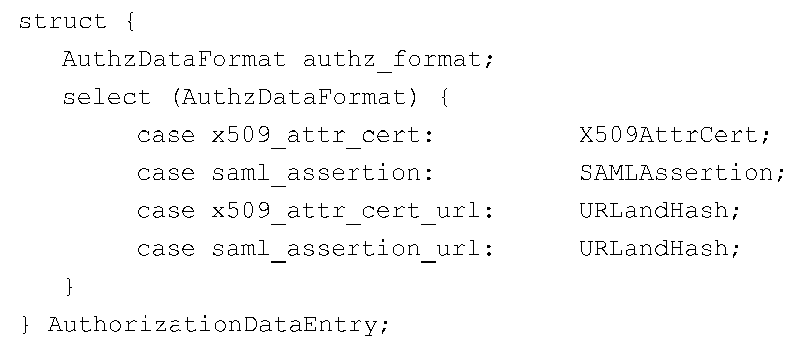 müssen erweitert werden auf: 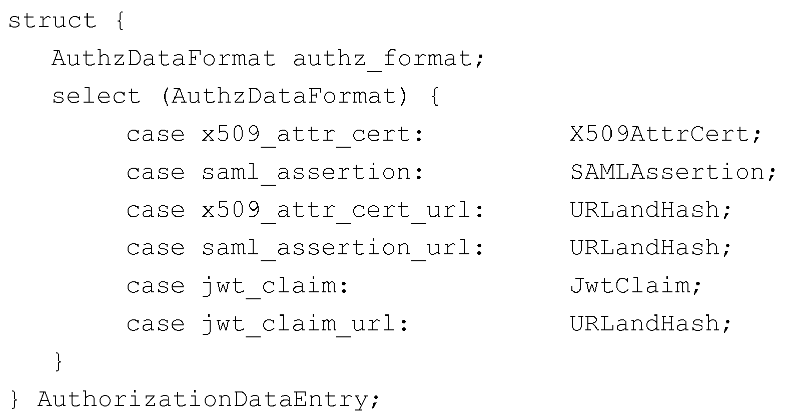 wobei JwtClaim wie folgt definiert ist:

```
      JwtClaim OCTETSTRING.
```

Das TLS-Protokoll 4 umfasst somit eine Erweiterung zur Übertragung von Token im JWT-Format. Die Übertragung der Authentisierungsinformation im JWT-Format erfolgt somit in dem Schritt S3 über das erweiterte TLS-Protokoll 4.

In einem Schritt S4 authentisiert der Server 2 das Feldgerät 1 anhand der empfangenen Authentisierungsinformation. Die Authentisierung des Feldgeräts 1 erfolgt nur bei zulässiger Authentisierungsinformation. Ist die Authentisierungsinformation zulässig, wird das Feldgerät 1 authentisiert und der sichere Kommunikationskanal 5 wird in einem Schritt S5 aufgebaut.

Der Kommunikationskanal 5 ermöglicht ein Datenaustausch zwischen dem Server 2 und dem Feldgerät 1 über das TLS-Protokoll 4.

Die anhand der Fig. 2 beschriebenen Schritte S1 - S5 sind alle Teil des TLS-Handshakes zwischen dem Server 2 und dem Feldgerät 1. Vorteilhaft kann die Authentisierung des Feldgeräts 1 gegenüber dem Server 2 Teil des TLS-Handshakes sein, weil das TLS-Protokoll zum Übertragen von Token im JWT-Format erweitert wurde.

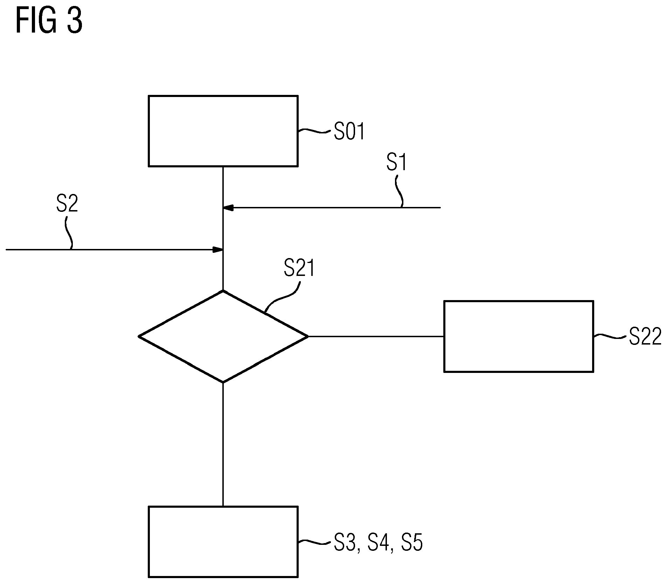

Die Fig. 3 zeigt ein Verfahren zum Aufbau eines Kommunikationskanals zwischen einer Servereinrichtung und einer Clienteinrichtung gemäß einer zweiten Ausführungsform. Das in der Fig. 3 dargestellte Verfahren ist eine Erweiterung für das Verfahren aus der Fig. 2. Das in der Fig. 1 dargestellte System 6 kann das in der Fig. 3 dargestellte Verfahren durchführen.

In einem Schritt S01 wird in dem Feldgerät 1 eine Zulässigkeitsliste gespeichert. Die Zulässigkeitsliste wird dem Feldgerät 1 von dem Server 2 bereitgestellt. Der Server 2 überträgt die Zulässigkeitsliste über das TLS-Protokoll 4. Alternativ erfolgt die Festlegung der Zulässigkeitsliste auf dem Feldgerät per Administration, in Abhängigkeit der Security Policy des Betreibers.

Die Zulässigkeitsliste enthält die URLs von allen Ausstellereinrichtungen, die für den Server 2 eine zulässige Authentisierungsinformation ausstellen können.

In dem bereits beschriebenen Schritt S1 empfängt das Feldgerät 1 die Anfrage von dem Server 2. Ferner empfängt das Feldgerät 1 in dem bereits beschriebenen Schritt S2 die Authentisierungsinformation von der Ausstellereinrichtung 3, welche die URL der Ausstellereinrichtung 3 als zugeordnete Ausstellereinrichtung umfasst.

In einem Schritt S21 überprüft das Feldgerät 1, ob die in dem Schritt S2 empfangene Authentisierungsinformation im Hinblick auf die Zulässigkeitsliste des Servers 2 zulässig ist.

Falls die mit der Authentisierungsinformation übermittelte URL in der Zulässigkeitsliste vorliegt wird bestimmt, dass die Authentisierungsinformation zulässig ist. In diesem Fall werden die bereits beschriebenen Schritte S3, S4 und S5 durchgeführt, in denen die zugelassene Authentisierungsinformation an den Server 2 übertragen wird, der Server 2 das Feldgerät 1 authentisiert und der Kommunikationskanal 5 aufgebaut wird.

Falls in dem Schritt S21 erkannt wird, dass die mit der Authentisierungsinformation übermittelte URL nicht in der Zulässigkeitsliste vorliegt, bestimmt das Feldgerät 1, dass die Authentisierungsinformation unzulässig ist. In diesem Fall wird in einem Schritt S22 der Aufbau des Kommunikationskanals 5 blockiert: das Feldgerät 1 übersendet keine Authentisierungsinformation an den Server 2. Ferner wird das Feldgerät 1 auch nicht authentisiert und der Kommunikationskanal 5 wird auch nicht aufgebaut. In dem Schritt S22 überträgt das Feldgerät 1 eine Fehlermeldung an den Server 2.

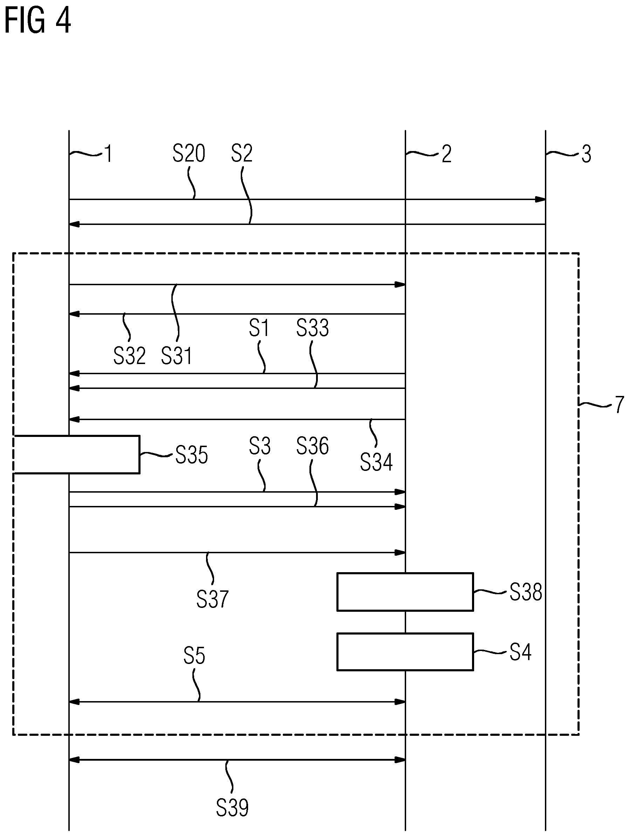

Die Fig. 4 zeigt ein Verfahren zum Aufbau eines Kommunikationskanals zwischen einer Servereinrichtung und einer Clienteinrichtung gemäß einer dritten Ausführungsform. Das in der Fig. 4 dargestellte Verfahren ist eine Erweiterung für das Verfahren aus der Fig. 2. Das in der Fig. 1 dargestellte System 6 kann das in der Fig. 4 dargestellte Verfahren durchführen.

In einem Schritt S20 authentisiert sich das Feldgerät 1 bei der Ausstellereinrichtung 3. Hierbei übersendet das Feldgerät 1 der Ausstellereinrichtung 3 feldgerätebezogene Information als clientbezogene Information. Die Ausstellereinrichtung 3 erstellt die Authentisierungsinformation im JWT-Format unter Berücksichtigung der feldgerätebezogenen Information derart, dass die Authentisierungsinformation feldgerätespezifisch ist. Die Authentisierungsinformation umfasst zudem die URL der Ausstellereinrichtung 3.

In dem bereits beschriebenen Schritt S2 überträgt die Ausstellereinrichtung 3 dem Feldgerät 1 die Authentisierungsinformation.

Die Schritte S31 bis S38 bilden den TLS-Handshake 7 zwischen dem Feldgerät 1 und dem Server 2. In diesen Schritten erfolgt der gesamte Datenaustausch zwischen dem Feldgerät 1 und dem Server 2 über das TLS-Protokoll 4.

In einem Schritt S31 übermittelt das Feldgerät 1 ein "Client Hello" an den Server 2. Das "Client Hello" enthält eine Information über eine TLS-Version und über durch das Feldgerät 1 unterstützte Cipher Suites.

In einem Schritt S32 übermittelt der Server 2 ein "Server Hello" an das Feldgerät 1, so wie ein Zertifikat des Servers 2 und einen Serverschlüssel. Das "Server Hello" enthält eine durch den Server 2 ausgewählte Cipher Suite und eine Sitzungsidentifikationsnummer.

In dem bereits beschriebenen Schritt S1 überträgt der Server 2 eine Anfrage an das Feldgerät 1 zum Übermitteln der Authentisierungsinformation im JWT-Format. Ferner überträgt der Server 2 in einem Schritt S33 die Zulässigkeitsliste an das Feldgerät 1. Die Schritte S1 und S33 sind Teil des "Server Hello".

In einem Schritt S34 informiert der Server 2 das Feldgerät 1 darüber, dass das "Server Hello" beendet ist.

In einem Schritt S35 wählt das Feldgerät 1 das JWT aus, das unter Berücksichtigung auf die Zulässigkeitsliste durch den Server 2 zulässig ist. Das ausgewählte JWT wird in dem bereits beschriebenen Schritt S3 über das TLS-Protokoll 4 an den Server 2 übermittelt.

In einem Schritt S36 wird die URL der Ausstellereinrichtung 3, die das ausgewählte JWT erstellt hat, von dem Feldgerät 1 an den Server 2 übertragen. Oft erfolgen die Schritte S3 und S36 zusammen. In einem Schritt S37 übermittelt das Feldgerät 1 dem Server 2 ferner einen Feldgerätschlüssel.

In einem Schritt S38 überprüft der Server 2 das empfangene JWT. Der Server überprüft dabei, dass das JWT im richtigen Format vorliegt. Falls in dem Schritt S38 bestimmt wird, dass das JWT zulässig ist, wird in dem bereits beschriebenen Schritt S4 das Feldgerät 1 durch den Server 2 authentisiert und in dem Schritt S5 wird der sichere Kommunikationskanal 5 über das TLS-Protokoll zwischen dem Feldgerät 1 und dem Server 2 aufgebaut.

In einem Schritt S39 werden dann Daten über das TLS-Protokoll über den Kommunikationskanal 5 sicher übertragen.

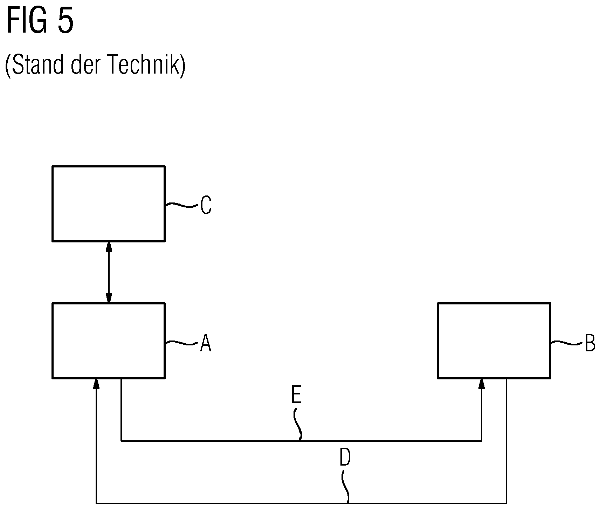

Die Fig. 5 zeigt ein System G aus dem Stand der Technik. Im Folgenden werden die Unterschiede zwischen dem System G aus dem Stand der Technik und dem ausführungsgemäßen System 6 aus der Fig. 1 hervorgehoben.

Das System G umfasst eine Clienteinrichtung A, eine Servereinrichtung B und eine Ausstellereinrichtung C. Um die Clienteinrichtung A gegenüber der Servereinrichtung B zu authentisieren, benötigt die Servereinrichtung B eine Authentisierungsinformation von der Clienteinrichtung A. Diese wird der Clienteinrichtung A von der Ausstellereinrichtung C bereitgestellt.

Die Authentisierung der Clienteinrichtung A erfolgt im Stand der Technik wie folgt. Zunächst übersendet die Servereinrichtung B eine Anfrage an die Clienteinrichtung A über ein erstes Kommunikationsprotokoll D. Das erste Kommunikationsprotokoll D ist das TLS-Protokoll.

Die Ausstellereinrichtung C stellt der Clienteinrichtung A über eine Netzwerkverbindung F eine Authentisierungsinformation im JWT-Format bereit. Diese wird anschließend von der Clienteinrichtung A über ein zweites Kommunikationsprotokoll E an die Servereinrichtung B übertragen. Das zweite Kommunikationsprotokoll E ist unterschiedlich von dem ersten Kommunikationsprotokoll D. Das zweite Kommunikationsprotokoll E ist ein HTTP-Protokoll. Das HTTP-Protokoll unterstützt die Übermittlung von Token im JWT-Format. Im Stand der Technik können Token im JWT-Format nicht über das TLS-Protokoll übertragen werden, weil das TLS-Protokoll im Stand der Technik das JWT-Format nicht unterstützt.

Zur Nutzung von JWT in HTTP ist eine HTTP-Umleitung zwischen der Servereinrichtung B und der Ausstellereinrichtung C notwendig. Im Stand der Technik ist die Authentisierung der Clienteinrichtung, im Gegensatz zu den Ausführungsformen aus den Fig. 1 bis 4, nicht Teil des TLS-Handshakes bzw. nicht Teil des Aufbaus des Kommunikationskanals zwischen der Clienteinrichtung und der Servereinrichtung.

Obwohl die vorliegende Erfindung anhand von Ausführungsbeispielen beschrieben wurde, ist sie vielfältig modifizierbar. Zum Beispiel können andere kryptographische Sicherheitsprotokolle, wie das IPsec-Protokoll, als das kryptographische Sicherheitsprotokoll verwendet werden. Die Authentisierungsinformation muss keine Ausstellereinrichtung zugeordnet sein; stattdessen kann der Authentisierungsinformation z.B. eine Zielservereinrichtungsinformation, eine Handhabungsinformation und/oder eine Sitzungsinformation zugeordnet sein. Die Reihenfolge der beschriebenen Schritte kann verändert werden. So kann der Schritt S1 beispielsweise nach dem Schritt S2 erfolgen.

## Patentansprüche

1. Verfahren zum Aufbau eines Kommunikationskanals (5) zum Austausch von Daten zwischen einer Servereinrichtung (2) und einer Clienteinrichtung (1), umfassend:
Übertragen (S2) einer Authentisierungsinformation von einer Ausstellereinrichtung (3) an die Clienteinrichtung (1);
Übertragen (S3) der Authentisierungsinformation von der Clienteinrichtung (1) an die Servereinrichtung (2) in einem kryptographischen Sicherheitsprotokoll (4);
Authentisieren (S4) der Clienteinrichtung (1) durch die Servereinrichtung (2) in Abhängigkeit von der empfangenen Authentisierungsinformation; und
Aufbauen (S5) des Kommunikationskanals (5) zwischen der Servereinrichtung (2) und der authentisierten Clienteinrichtung (1) über das kryptographische Sicherheitsprotokoll (4); wobei
das kryptographische Sicherheitsprotokoll (4) ein TLS-Handshake-Protokoll ist; und
die Authentisierungsinformation ein JSON Web Token ist.

2. Verfahren nach Anspruch 1, wobei der Authentisierungsinformation eine Ausstellereinrichtung zugeordnet ist, die einen Austeller der Authentisierungsinformation angibt.

3. Verfahren nach Anspruch 1 oder 2, welches ferner umfasst:
Speichern (S01) einer Zulässigkeitsliste in der Clienteinrichtung (1) und/oder in der Servereinrichtung (2), die angibt, welche Ausstellereinrichtung (3) aus einer Vielzahl von Ausstellereinrichtungen eine zum Authentisieren der Clienteinrichtung (1) zulässige Authentisierungsinformation erstellen können;
Überprüfen (S21), in der Clienteinrichtung (1) oder in der Servereinrichtung (2), ob die der Authentisierungsinformation zugeordnete Ausstellereinrichtung gemäß der Zulässigkeitsliste zulässig ist; und
Falls die Ausstellereinrichtung gemäß der Zulässigkeitsliste zulässig ist, Authentisieren (S4) der Clienteinrichtung (1) durch die Servereinrichtung (2) anhand der Authentisierungsinformation.

4. Verfahren nach einem der Ansprüche 1 bis 3, wobei der Authentisierungsinformation eine Zielinformation zugeordnet ist, die eine Zielservereinrichtungsinformation, für den der Authentisierungstoken bestimmt ist, angibt; und wobei das Verfahren ferner umfasst:
Überprüfen durch die Clienteinrichtung (1), ob die Zielservereinrichtungsinformation mit der Servereinrichtung (2), die die Anfrage an die Clienteinrichtung (1) übermittelt hat, übereinstimmt; und
Falls die Zielservereinrichtungsinformation mit der Servereinrichtung (2) übereinstimmt, Übertragen (S3) der Authentisierungsinformation von der Clienteinrichtung (1) an die Servereinrichtung (2).

5. Verfahren nach einem der Ansprüche 1 bis 4, welches ferner umfasst:
Auswählen (S35), in der Clienteinrichtung (1), einer Authentisierungsinformation aus einer Vielzahl von Authentisierungsinformationen, der eine gemäß der Zulässigkeitsliste zulässige Ausstellereinrichtung zugeordnet ist und/oder der eine Zielservereinrichtungsinformation zugeordnet ist, die mit der Servereinrichtung (2), die die Authentisierungsinformation beantragt hat, übereinstimmt; und
Übertragen (S3) der ausgewählten Authentisierungsinformation von der Clienteinrichtung (1) an die Servereinrichtung über das kryptographische Sicherheitsprotokoll (4).

6. Verfahren nach einem der Ansprüche 1 bis 5, welches ferner umfasst:
Falls die Clienteinrichtung (1) nicht durch die Servereinrichtung (2) authentisiert wird, Blockieren (S22) des Aufbaus des Kommunikationskanals (5) zwischen der Servereinrichtung (2) und der Clienteinrichtung (1).

7. Verfahren nach einem der Ansprüche 1 bis 6, welches ferner umfasst:
Übertragen (S20) einer clienteinrichtungbezogenen Information von der Clienteinrichtung (1) an die Ausstellereinrichtung (3); und
Erstellen der Authentisierungsinformation unter Berücksichtigung der clienteinrichtungbezogenen Information in der Ausstellereinrichtung (3).

8. Verfahren nach einem der Ansprüche 1 bis 7, wobei die Authentisierungsinformation zumindest eine Handhabungsinformation umfasst, die Angaben zum ordnungsgemäßen Übertragen und/oder Benutzen der Authentisierungsinformation angibt und wobei das Übertragen (S3) der Authentisierungsinformation und/oder das Authentisieren (S4) der Clienteinrichtung (1) unter Berücksichtigung der Handhabungsinformation erfolgt.

9. Verfahren nach einem der Ansprüche 1 bis 8, ferner umfassend:
Speichern einer Ausstellereinrichtungsliste in der Clienteinrichtung (1), die die Ausstellereinrichtungen angibt, von denen die Clienteinrichtung (1) eine gültige Authentisierungsinformation besitzt und/oder von denen die Clienteinrichtung (1) eine Authentisierungsinformation anfordern kann.

10. Verfahren nach einem der Ansprüche 1 bis 9, ferner umfassend:
Anfordern (S1) der Authentisierungsinformation für die Clienteinrichtung (1) durch die Servereinrichtung (2) über das kryptographische Sicherheitsprotokoll (4) von der Clienteinrichtung (1).

11. Verfahren nach einem der Ansprüche 1 bis 10, wobei die Authentisierungsinformation ferner eine Sitzungsinformation über die aktuelle Verbindung zwischen der Clienteinrichtung (1) und der Servereinrichtung (2) enthält.

## Claims

1. Method for setting up a communication channel (5) for exchanging data between a server device (2) and a client device (1), comprising:
transmitting (S2) authentication information from an issuer device (3) to the client device (1);
transmitting (S3) the authentication information from the client device (1) to the server device (2) in a cryptographic security protocol (4);
authenticating (S4) the client device (1) by means of the server device (2) depending on the received authentication information; and
setting up (S5) the communication channel (5) between the server device (2) and the authenticated client device (1) by means of the cryptographic security protocol (4); wherein
the cryptographic security protocol (4) is a TLS handshake protocol; and
the authentication information is a JSON Web Token.

2. Method according to Claim 1, wherein an issuer device is assigned to the authentication information indicating an issuer of the authentication information.

3. Method according to Claim 1 or 2, which furthermore comprises:
storing (S01) a permissibility list in the client device (1) and/or in the server device (2), which permissibility list indicates which issuer device (3) from a multiplicity of issuer devices can create authentication information that is permissible for authenticating the client device (1);
checking (S21), in the client device (1) or in the server device (2), whether the issuer device assigned to the authentication information is permissible in accordance with the permissibility list; and
if the issuer device is permissible in accordance with the permissibility list, authenticating (S4) the client device (1) by means of the server device (2) on the basis of the authentication information.

4. Method according to any of Claims 1 to 3, wherein a destination information is assigned to the authentication information, the destination information indicating destination server device information for which the authentication token is intended; and wherein the method furthermore comprises:
checking by means of the client device (1) whether the destination server device information corresponds to the server device (2) that communicated the enquiry to the client device (1); and
if the destination server device information corresponds to the server device (2), transmitting (S3) the authentication information from the client device (1) to the server device (2) .

5. Method according to any of Claims 1 to 4, which furthermore comprises:
selecting (S35), in the client device (1), from a multiplicity of items of authentication information an item of authentication information to which is assigned an issuer device permissible in accordance with the permissibility list and/or to which is assigned destination server device information corresponding to the server device (2), that asked for the authentication information; and
transmitting (S3) the selected authentication information from the client device (1) to the server device by means of the cryptographic security protocol (4).

6. Method according to any of Claims 1 to 5, which furthermore comprises:
if the client device (1) is not authenticated by the server device (2), blocking (S22) the set-up of the communication channel (5) between the server device (2) and the client device (1).

7. Method according to any of Claims 1 to 6, which furthermore comprises:
transmitting (S20) client device-related information from the client device (1) to the issuer device (3); and
creating the authentication information taking account of the client device-related information in the issuer device (3).

8. Method according to any of Claims 1 to 7, wherein the authentication information comprises at least one item of handling information indicating indications for proper transmission and/or use of the authentication information, and wherein transmitting (S3) the authentication information and/or authenticating (S4) the client device (1) are/is carried out taking account of the handling information.

9. Method according to any of Claims 1 to 8, furthermore comprising:
storing an issuer device list in the client device (1), which indicates the issuer devices from which the client device (1) has valid authentication information and/or from which the client device (1) can request authentication information.

10. Method according to any of Claims 1 to 9, furthermore comprising:
requesting (S1), by means of the server device (2), the authentication information for the client device (1) by way of the cryptographic security protocol (4) from the client device (1) .

11. Method according to any of Claims 1 to 10, wherein the authentication information furthermore contains a session information about the current connection between the client device (1) and the server device (2).

## Revendications

1. Procédé d'établissement d'un canal de communication (5) pour échanger des données entre un dispositif serveur (2) et un dispositif client (1), comprenant :
la transmission (S2) d'une information d'authentification d'un dispositif émetteur (3) au dispositif client (1);
la transmission (S3) de l'information d'authentification du dispositif client (1) au dispositif serveur (2) dans un protocole de sécurité cryptographique (4) ;
l'authentification (S4) du dispositif client (1) par le dispositif serveur (2) en fonction de l'information d'authentification reçue ; et
l'établissement (S5) du canal de communication (5) entre le dispositif serveur (2) et le dispositif client authentifié (1) via le protocole de sécurité cryptographique (4) ;
le protocole de sécurité cryptographique (4) étant un protocole Handshake TLS ; et
l'information d'authentification étant un jeton Web JSON.

2. Procédé selon la revendication 1, dans lequel, à l'information d'authentification est associé un dispositif émetteur qui indique un émetteur de l'information d'authentification.

3. Procédé selon la revendication 1 ou 2, comprenant en outre :
la sauvegarde (S01) d'une liste d'autorisation dans le dispositif client (1) et/ou dans le dispositif serveur (2), laquelle indique quel dispositif émetteur (3) d'une pluralité de dispositifs émetteurs peut créer une information d'authentification autorisée pour authentifier le dispositif client (1) ;
la vérification (S21), dans le dispositif client (1) ou dans le dispositif serveur (2), si le dispositif émetteur associé à l'information d'authentification est autorisé conformément à la liste d'autorisation ; et
si le dispositif émetteur est autorisé conformément à la liste d'autorisation, l'authentification (S4) du dispositif client (1) par le dispositif serveur (2) à l'aide de l'information d'authentification.

4. Procédé selon l'une des revendications 1 à 3, dans lequel, à l'information d'authentification est associée une information cible qui indique une information de dispositif serveur cible à laquelle le jeton d'authentification est destiné ;
et le procédé comprenant en outre :
la vérification par le dispositif client (1) si l'information de dispositif serveur cible coïncide avec le dispositif serveur (2) qui a transmis la requête au dispositif client (1) ; et
si l'information de dispositif serveur cible coïncide avec le dispositif serveur (2), la transmission (S3) de l'information d'authentification du dispositif client (1) au dispositif serveur (2).

5. Procédé selon l'une des revendications 1 à 4, lequel comprend en outre :
la sélection (S35), dans le dispositif client (1), d'une information d'authentification parmi une pluralité d'informations d'authentification, à laquelle est associé un dispositif émetteur autorisé conformément à la liste d'autorisation et/ou à laquelle est associée une information de dispositif serveur cible qui coïncide avec le dispositif serveur (2) qui a demandé l'information d'authentification ; et
la transmission (S3) de l'information d'authentification sélectionnée du dispositif client (1) au dispositif serveur via le protocole de sécurité cryptographique (4).

6. Procédé selon l'une des revendications 1 à 5, lequel comprend en outre :
si le dispositif client (1) n'est pas authentifié par le dispositif serveur (2), le blocage (S22) de l'établissement du canal de communication (5) entre le dispositif serveur (2) et le dispositif client (1).

7. Procédé selon l'une des revendications 1 à 6, lequel comprend en outre :
la transmission (S20) d'une information en rapport avec le dispositif client du dispositif client (1) au dispositif émetteur (3) ; et
la création de l'information d'authentification compte tenu de l'information en rapport avec le dispositif client dans le dispositif émetteur (3).

8. Procédé selon l'une des revendications 1 à 7, dans lequel, l'information d'authentification comprend au moins une information de manipulation qui indique des indications pour la transmission et/ou l'utilisation correctes de l'information d'authentification et la transmission (S3) de l'information d'authentification et/ou l'authentification (S4) du dispositif client (1) se faisant compte tenu de l'information de manipulation.

9. Procédé selon l'une des revendications 1 à 8, comprenant en outre :
la sauvegarde d'une liste de dispositifs émetteurs dans le dispositif client (1), laquelle indique les dispositifs émetteurs dont le dispositif client (1) possède une information d'authentification valable et/ou dont le dispositif client (1) peut demander une information d'authentification.

10. Procédé selon l'une des revendications 1 à 9, comprenant en outre :
la requête (S1) de l'information d'authentification pour le
dispositif client (1) par le dispositif serveur (2) via le protocole de sécurité cryptographique (4) du dispositif client (1).

11. Procédé selon l'une des revendications 1 à 10, dans lequel, l'information d'authentification contient en outre une information de session sur la liaison actuelle entre le dispositif client (1) et le dispositif serveur (2) .
